# EUROPÄISCHE PATENTSCHRIFT

(11) **EP 3 231 984 B1**
(45) Veröffentlichungstag und Bekanntmachung des Hinweises auf die Patenterteilung: **03.06.2020**
(21) Anmeldenummer: 16164768.0
(22) Anmeldetag: 11.04.2016
(51) Int. Cl.: E21B 21/06, C02F 11/12

(54) **VERFAHREN ZUR AUFBEREITUNG VON BOHRSCHLAMM**
PROCESS FOR THE TREATMENT OF DRILLING MUD
PROCEDE DE TRAITEMENT DE BOUE DE FORAGE

(43) Veröffentlichungstag der Anmeldung: 18.10.2017
(73) Patentinhaber: Max Wild GmbH, 88450 Berkheim (DE)
(72) Erfinder: Schad, Josef, 88459 Tannheim (DE); Hörmann, Markus, 88487 Mietingen (DE)
(74) Vertreter: Patentanwälte Olbricht, Buchold, Keulertz Partnerschaft mbB

(56) Entgegenhaltungen:
- EP-A1- 0 224 353
- WO-A1-2006/136800
- WO-A1-2015/039174
- DE-A1- 2 444 903
- GB-A- 2 096 297
- JP-A- H07 136 662
- JP-A- 2004 231 469
- US-A- 3 693 951
- US-A- 4 453 319
- US-A- 4 913 245
- US-A1- 2015 075 024

## Beschreibung

Die Erfindung betrifft ein Verfahren zur Aufbereitung einer wässrigen Bohrspülung oder eines wässrigen Bohrschlamms, wobei die Bohrspülung oder der Bohrschlamm zumindest einen Wasseranteil und einen Feststoffanteil aufweist.

Horizontalbohrungen werden hauptsächlich dazu eingesetzt, Leitungen im Infrastrukturbau, wie beispielsweise Stromleitungen, Gasleitungen oder Wasserleitungen an schlecht zugänglichen Orten zu verlegen. Derartige Bohrungen können unter Flüssen, Autobahnen, Bahngleisen oder Ähnlichem angefertigt werden und erübrigen das sehr aufwändige oder gar unmögliche Verlegen der horizontal verlaufenden Leitungen durch Anfertigen von über die gesamte Leitungslänge verlaufenden Gräben.
Bei der Anfertigung solcher Horizontalbohrungen kommen, wie auch bei anderen Bohrungen wie den klassischen Vertikalbohrungen, Bohrspülungen zum Einsatz, die über den Bohrkopf in das Bohrloch gepumpt werden. Die Bohrspülungen sind aus verschiedenen Stoffen zusammengesetzt, wobei der Hauptbestandteil meist Wasser ist. Als Zuschlagsstoff wird meist Bentonit eingesetzt, welches zusammen mit dem Wasseranteil eine Suspension bildet. Darüber hinaus enthalten Bohrspülungen weitere Zuschläge, die an den zu bohrenden Untergrund angepasst werden. Die Bohrspülungen haben zur Aufgabe, den Bohrkopf zu kühlen sowie den entstehenden Bohrkanal zu stabilisieren und das Erdreich abzuführen. Zur Fertigstellung der Bohrung wird die gebrauchte Bohrspülung wieder aus dem Bohrloch abgepumpt und enthält dann Material aus dem Bohrloch. Zu dem Material aus dem Bohrloch können auch Schadstoffe wie beispielsweise Schwermetalle oder ausgewaschene Altlasten zählen.

Da gerade bei großen Horizontalbohrungen erhebliche Mengen gebrauchter Bohrspülung anfallen, ist eine fachgerechte Aufbereitung oder Entsorgung von Bohrspülung eine ernstzunehmende Aufgabe für die Hersteller von Horizontalbohrungen. Darüber hinaus fallen auch große Mengen gebrauchter Bohrspülung aus Vertikalbohrungen an, für welche das Gleiche bezüglich Funktionsweise und Entsorgungsproblematik gilt, wie für die Horizontalbohrungen.

Bislang wurde der Bohrschlamm oder die Bohrspülung auf landwirtschaftlichen Flächen ausgebracht, oder in Deponien, unter hohem Kostenaufwand, gelagert. Da die konkrete Zusammensetzung des Bohrschlamms unbekannt ist, ist eine Ausbringung auf landwirtschaftlichen Flächen letztendlich ein unkalkulierbares Risiko.

Aus WO 2015/039174A1 ist ein Verfahren und eine Vorrichtung zur Behandlung von Schlämmen bekannt. Dabei wird ein Teil des Wasseranteils der Schlämme in einem Schneckenförderer verdampft.

GB 2096 297 A zeigt ein Verfahren zum Trocknen von Bohrschlämmen. In diesem Verfahren werden die Bohrschlämme auf ein Förderband aufgebracht und ein Teil des darin enthaltenen Wasseranteiles durch heißes Gas verdampft.

Auch in US 4,453,319 A wird ein Verfahren und eine Vorrichtung zur Behandlung von Bohrschlämmen offenbart. Dabei wird in den Schlämmen enthaltenes Wasser zum Teil in einem Schneckenförderer verdampft.

US 2015/0075024 A1 offenbart eine Trocknungsvorrichtung mit einem Förderband. Diese Vorrichtung ist für Biomasse vorgesehen und trocknet mit niedriger Temperatur.

In DE 24 44 903 A1 wird eine Schlammbehandlungsvorrichtung mit einem Förderband beschrieben, die zur Behandlung von Abwässern vorgesehen ist. Die Abwässer werden hier elektrochemisch behandelt.

JPH0713662A offenbart ebenfalls eine Vorrichtung zur Behandlung von Abwasser. Nach einer chemischen Behandlung des Abwassers wird dieses zumindest teilweise auf einem Förderband getrocknet.

Aufgabe der vorliegenden Erfindung ist es daher eine Möglichkeit vorzuschlagen, wie der anfallende Bohrschlamm oder die anfallende Bohrspülung entsorgt werden kann.

Diese Aufgabe wird gelöst durch ein Verfahren nach Patentanspruch 1.
Ein erfindungsgemäßes Verfahren eignet sich sowohl zur Aufbereitung einer wässrigen Bohrspülung als auch zur Aufbereitung eines wässrigen Bohrschlammes, der größere Mengen an aus der Bohrung ausgebrachtem Material enthält. Im ersten Verfahrensschritt werden Wasseranteil und Feststoffanteil dadurch voneinander getrennt, dass der Wasseranteil verdampft wird. Durch die Verdampfung ist sichergestellt, dass nur Wassermoleküle die Bohrspülung verlassen bzw. sämtliche Nicht-Wasseranteile bei der Verdampfung zurückbleiben. Im zweiten Verfahrensschritt wird der bei der Verdampfung entstehende Wasserdampf aus dem Prozess abgeführt. Im dritten Verfahrensschritt wird der Feststoffanteil der Bohrspülung bzw. des Bohrschlammes gesammelt und ebenfalls aus dem Verfahren entfernt. Die Formulierung "erster Verfahrensschritt..., zweiter Verfahrensschritt,..." soll hier nicht bezeichnen, dass der nächste Schritt erst nach dem Abschluss des vorhergehenden Schrittes erfolgen kann. Es ist selbstverständlich auch möglich das erfindungsgemäße Verfahren in einem kontinuierlichen Prozess zu realisieren wobei dann der Wasseranteil kontinuierlich verdampft und Wasseranteil und Feststoffanteil gleichzeitig kontinuierlich entfernt werden. Ein wesentlicher Vorteil des erfindungsgemäßen Verfahrens ist der, dass der in Form von Wasserdampf abgeführte Wasseranteil der Bohrspülung bzw. des Bohrschlammes absolut rein ist und keinerlei Rückstände mehr darin enthalten sind. Zurück bleiben die in der Bohrspülung enthaltenen Feststoffe, die dann je nach Bedarf weiterverarbeitet oder entsorgt werden können. Da der Wasseranteil den größten Volumen- und Gewichtsanteil der Bohrspülung darstellt, ist der Transport des zurückbleibenden Feststoffanteils alleine wesentlich einfacher als der Transport beider Bestandteile, nämlich des Wasseranteils mit evtl. Restverschmutzung sowie des Feststoffanteils. Ein Verfahren, bei dem der Wasseranteil einer Bohrspülung einfach verdampft wird, ist wesentlich einfacher durchzuführen, als ein Verfahren bei dem in der Bohrspülung enthaltene Inhaltsstoffe mechanisch oder chemisch aus der Bohrspülung entfernt werden müssen. Für die mechanische oder chemische Entfernung des Feststoffanteils werden meist mehrstufige Anlagen benötigt, die aufwändig und teuer sind, sowie großen Bauraum benötigen. Ein erfindungsgemäßes Verfahren zur Aufbereitung einer Bohrspülung kann dagegen mit einer einfacher aufgebauten Anlage durchgeführt werden, die wesentlich günstiger, kleiner und leichter ist.

Des Weiteren ist in dem Vorschlag vorteilhafterweise vorgesehen, dass der im Verfahren entstehende Wasserdampf direkt an die Atmosphäre abgegeben wird. Der Wasseranteil der Bohrspülung stellt den weitaus größeren Volumen- und Gewichtsanteil der Zusammensetzung dar. Durch die Verdampfung und die Abgabe des entstehenden Wasserdampfes an die Atmosphäre reduziert sich Volumen und Gewicht der Bohrspülung auf nur noch den Feststoffanteil. Sämtliche Logistik wird dadurch stark vereinfacht, vor allem der Transport zur Entsorgung wird aufgrund des wesentlich geringeren Volumens und Gewichts einfacher und günstiger. Aufgrund des Verdampfungsprozesses ist auch sichergestellt, dass der abgegebene Wasseranteil absolut rein ist und ohne weitere Vorkehrungen in den natürlichen Wasserkreislauf zurückgegeben werden kann. Des Weiteren ist an dieser Ausführungsform vorteilhaft, dass die Abgabe des Wasserdampfes an die Atmosphäre mit sehr einfach gebauten Anlagenkomponenten, wie beispielsweise mit einem Kamin realisiert werden kann. Das Verfahren zur Aufbereitung der Bohrspülung ist somit mit einer einfachen und kostengünstigen Anlage durchführbar.

In einer vorteilhaften Ausgestaltung ist vorgesehen, dass die im Verfahren entstehenden Feststoffe aus dem Feststoffanteil entsorgt werden. In vielen Fällen enthalten gebrauchte Bohrspülungen Schadstoffe, die durch die Bohrung aus dem Erdreich, durch welches die Bohrung geführt wurde, ausgeschwemmt wurden. Somit ist eine Ausbringung des Feststoffanteils auf Agrarflächen, wie es in der Vergangenheit bereits praktiziert wurde, aus Sicht des Umweltschutzes als kritisch zu betrachten. Daher ist meist eine Entsorgung auf dafür geeigneten Deponien die beste Möglichkeit, mit dem nach dem Aufbereitungsverfahren zurückbleibenden Feststoffanteil umzugehen. Auch in diesem Fall ist ein erfindungsgemäße Verfahren besonders vorteilhaft, da nur der minimale Anteil der gebrauchten Bohrspülung, nämlich nur der Feststoffanteil, nicht der Wasseranteil entsorgt werden müssen. Somit wird auch ein minimaler Platz zur Entsorgung und Deponierung der verbleibenden Schadstoffe in Anspruch genommen.

Vorteilhafterweise ist vorgesehen, dass die im Verfahren entstehende Abwärme zur Erwärmung anderer Anlagen oder Einrichtungen, wie beispielsweise eines Baucontainers verwendet wird. Bei der Verdampfung des Wasseranteils wird eine große Menge Wärme benötigt, die auch Abwärme in der Anlage erzeugt. Diese Abwärme kann für andere Anwendungen genutzt werden, die sich in der Nähe der Aufbereitungsanlage befinden. Da das Verfahren zur Aufbereitung von Bohrspülung günstigerweise auch auf oder sehr nahe an der Baustelle durchgeführt wird, kann die entstehende Abwärme beispielsweise zur Heizung eines Baucontainers verwendet werden, der als Aufenthaltsraum für die beschäftigten Personen dient. Besonders im Winter kann dadurch Heizenergie für diesen meist schlecht isolierten Baucontainer eingespart werden. Die Nutzung der Abwärme ist selbstverständlich nicht nur auf die Heizung eines Baucontainers beschränkt. So wäre es beispielsweise auch möglich die entstehende Abwärme in ein Fernwärmenetz einzuspeisen oder sie für Trocknungsprozesse im Baustellenumfeld einzusetzen.

Bei einer bevorzugten Ausgestaltung des Vorschlags ist vorgesehen, dass die im Verfahren entstehende Abwärme bzw. der Energiegehalt des Wasserdampfes zum Vorwärmen der aufzubereitenden Bohrspülung verwendet wird. In dieser Ausführungsform wird die bei der Verdampfung entstehende Abwärme oder auch die im erzeugten Wasserdampf enthaltene Energie dazu verwendet, die aufzubereitende Bohrspülung vor dem eigentlichen Verdampfungsprozess vorzuwärmen. Durch eine solche Vorwärmung weist die Bohrspülung im eigentlichen Verdampfungsprozess bereits einen höheren Energiegehalt auf, wodurch wiederum Energie bei der Verdampfung eingespart wird. Diese Ausführungsform stellt somit eine Energierückführung innerhalb eines erfindungsgemäßen Aufbereitungsverfahren dar. Diese Energierückführung kann beispielsweise in einem Wärmetauschprozess erfolgen, indem die Energie aus dem entstehenden Wasserdampf auf die vorzuwärmende Bohrspülung übertragen wird. Für derartige Prozesse sind verschiedene Ausführungen von Wärmetauschern verfügbar. Auch in dieser Ausführungsform ist es vorteilhaft, dass durch die Energierückgewinnung Heizenergie eingespart wird, die ansonsten von außen zugeführt werden müsste. Im Falle einer Energieversorgung des Verdampfungsprozess es durch Verbrennungsprozesse wird neben der Einsparung von Brennstoffen auch die im Aufbereitungsverfahren ausgestoßene Menge an Kohlendioxid durch die Energierückführung reduziert.

Geschickter Weise ist vorgesehen, dass der Wasserdampf in den Vorlauf neuer Bohrspülung kondensiert wird. In dieser weiteren Ausführungsform eines erfindungsgemäßen Verfahrens, die selbstverständlich auch mit den bereits beschriebenen Ausführungsformen kombiniert werden kann, wird der im Aufbereitungsprozess entstehende Wasserdampf durch Kondensation wieder in Wasser umgewandelt und zur Herstellung neuer Bohrspülung verwendet. Dies bietet besondere Vorteile bei der Durchführung des Aufbereitungsprozesses in Baustellennähe. Die anfallende gebrauchte Bohrspülung kann dabei mit sehr geringen Transportwegen aufbereitet werden und durch die Kondensation des Wasserdampfes aus dem Aufbereitungsprozess kann, ebenfalls in Baustellennähe, Wasser zur Erzeugung neuer Bohrspülung bereitgestellt werden. Somit wird der Bedarf an frischem Wasser bei der Durchführung von Horizontalbohrungen deutlich reduziert. Die Kondensation des Wasserdampfes kann dabei über gewöhnliche, am Markt erhältliche Anlagenkomponenten realisiert werden. In einer besonders einfachen Ausführungsform wäre es auch möglich, den Wasserdampf in einen flüssigen Ansatz neuer Bohrspülung dampfförmig einzuleiten und die Kondensation des Dampfes direkt in der neuen Bohrspülung erfolgen zu lassen. Vorteilhaft an dieser Ausgestaltung ist, dass durch die Einleitung des Dampfes gleichzeitig eine Durchmischung der neuen Bohrspülung stattfindet.

Vorteilhafterweise ist vorgesehen, dass der im Verfahren entstehende Wasserdampf als Energieeintrag oder Materialeintrag für Folgeprozesse, wie beispielsweise eine Dampfturbine, verwendet wird. In dieser Ausführungsform wird der Wasserdampf für Folgeprozesse verwendet, die nicht zum Aufbereitungsverfahren für Bohrspülung gehören. Es kann dabei sowohl die im Wasserdampf enthaltene Energie als auch das enthaltene Wasser an sich für diese Folgeprozesse verwendet werden. Energie kann beispielsweise dadurch gewonnen werden, dass der Wasserdampf einer Dampfturbine zugeführt wird, die dann wiederum über Koppelung mit einem Generator elektrische Energie erzeugt. Weiterhin wäre es möglich das im Wasserdampf enthaltene Wasser für vom Aufbereitungsverfahren unabhängige Prozesse auf der Baustelle einzusetzen. Selbstverständlich sind auch Kombinationen aus Nutzung der Energie und Nutzung des enthaltenen Wassers aus dem, im Verfahren anfallenden Dampf möglich.

In einer vorteilhaften Ausgestaltung ist vorgesehen, dass vor dem Verdampfen des Wasseranteils die Bohrspülung homogenisiert wird. Bohrspülungen liegen in den meisten Fällen als Suspensionen vor. Suspensionen neigen dazu, dass sich der Feststoffanteil absetzt, wenn keine Durchmischung vorliegt. Ein abgesetzter Feststoffanteil einer Bohrspülung bringt bei der Aufbereitung aber wesentliche Nachteile mit sich. Ein Teil der abgesetzten Bohrspülung enthält sehr viele Feststoffe, ein anderer Teil dagegen sehr wenige. Somit ist es schwierig ein Aufbereitungsverfahren so zu gestalten, dass es zu jeder Zeit und bei allen Feststoffanteilen der gerade aufbereiteten Bohrspülung optimal funktioniert. Durch eine Homogenisierung der Bohrspülung vor dem Aufbereitungsverfahren wird ein konstanter Feststoffanteil pro Volumen der Bohrspülung sichergestellt. Dies bietet klare Vorteile für die Einstellung eines stabilen Aufbereitungsverfahrens. Die Homogenisierung der Bohrspülung kann dabei auf verschiedene Arten erfolgen, wie beispielsweise durch Rührer, Rüttler, Strömungsdüsen oder eingeblasene Luft.

Des Weiteren ist in dem Vorschlag vorteilhafterweise vorgesehen, dass das gesamte Verfahren in einer mobilen Anlage erfolgt, die auch während des Transports, beispielsweise auf einem Lastwagen, arbeitet. In dieser Ausführungsform wird der Vorteil eines erfindungsgemäßen Verfahrens zur Aufbereitung von Bohrspülung genutzt, dass dieses Verfahren mit relativ einfach aufgebauten, leichten Anlagen durchführbar ist. Gebrauchte Bohrspülung fällt an verteilten Baustellen an, deren Standorte immer wieder wechseln. Da bei einer solchen Bohrung oft große Mengen an Bohrspülung anfallen, stellt der Transport dieser gebrauchten Bohrspülung zu fest installierten Aufbereitungsanlagen einen großen Aufwand dar, der auch mit hohen Kosten verbunden ist. Mit einem erfindungsgemäßen Verfahren ist es möglich, eine mobile Anlage einzusetzen, die in einfacher Weise, beispielsweise auf einem Lastwagen, zu den einzelnen Baustellen transportiert werden kann. Somit müssen nicht große Mengen an Bohrspülung mit großem Wassergehalt und damit verbunden mit großem Gewicht zu einer fest installierten Aufbereitungsanlage transportiert werden, sondern eine kleine leichte Aufbereitungsanlage wird stattdessen zur Bohrspülung transportiert. Da die Baustellen, an denen Horizontalbohrungen durchgeführt werden und gebrauchte Bohrspülung anfällt meist recht weit entfernt voneinander liegen, fallen während des Transports der mobilen Anlage von einer Baustelle zur nächsten Ausfallzeiten für das Aufbereitungsverfahren an. Deshalb ist in einer Ausführungsform der Erfindung ein Verfahren vorgesehen, welches in einer mobilen Anlage auch während des Transports auf einem Lastwagen durchgeführt werden kann. Die Transportzeit der mobilen Anlage kann somit zur Aufbereitung von Bohrspülung sinnvoll genutzt werden.

Die Aufgabe der Erfindung wird auch gelöst durch eine Anlage zur Aufbereitung einer wässrigen Bohrspülung oder eines wässrigen Bohrschlamms gemäß Patentanspruch 4.

Eine zur Erfindung gehörende Aufbereitungsanlage enthält Anlagenkomponenten für die Durchführung aller notwendigen Verfahrensschritte. Zentrale Bedeutung kommt hierbei einem Transportelement zu, welches die gebrauchte Bohrspülung von einem Verfahrensschritt zum nächsten transportiert. Zunächst wird die aufzubereitende Bohrspülung an einem ersten Ort auf das Transportelement aufgebracht und von diesem weitertransportiert. An einem zweiten Ort in der Anlage findet dann die Verdampfung des Wasseranteils statt, wobei an diesem zweiten Ort Heizelemente vorgesehen sind, die die für die Verdampfung des Wasseranteils benötigte Energie zur Verfügung stellen. Nach der Verdampfung des Wasseranteils der Bohrspülung verbleibt der Feststoffanteil auf dem Transportelement, welches sich zusammen mit diesem Feststoffanteil weiterbewegt. An einem dritten Ort in der Anlage ist eine Vorrichtung vorgesehen, die den Feststoffanteil von dem Transportelement entfernt. Schließlich ist in der Anlage noch ein Sammelelement vorgesehen welches den vom Transportelement entfernten Feststoffanteil aufnimmt und eine Möglichkeit zur Entnahme des Feststoffanteils aus dem Aufbereitungsverfahren zur Verfügung stellt. Durch das Vorsehen eines derartigen Transportelementes ist es besonders einfach, ein kontinuierlich arbeitendes Aufbereitungsverfahren in einer Anlage zu realisieren. Das Transportelement wird in zeitlich nacheinander immer wieder ablaufenden Zyklen jeweils mit Bohrspülung beladen, führt die Bohrspülung dann den Aufbereitungsschritten zu und kehrt anschließend wieder zum Ursprungsort zurück, wo es wiederum mit Bohrspülung beladen wird.

Geschickter Weise ist vorgesehen, dass ein Kamin den aus der Bohrspülung verdampften Wasseranteil in Form von Wasserdampf aus der Anlage in die Atmosphäre leitet. Ein Kamin stellt eine besonders einfache Anlagenkomponente dar, mit der der entstehende Wasserdampf aus dem Aufbereitungsverfahren abgeführt werden kann. Da bei der Verdampfung die möglicherweise gefährlichen Feststoffe in der Anlage verbleiben und bei nur reiner Wasserdampf bei der Aufbereitung entsteht, kann dieser Dampf auch ohne Bedenken hinsichtlich Umweltschutz direkt an die Umgebung abgegeben werden.

Vorteilhafterweise ist vorgesehen, dass eine Leitung den beim Verdampfen entstehenden Wasserdampf einem Wärmetauscher zuführt, wobei der Wärmetauscher die aufzubereitende Bohrspülung vor der Zuführung zum Verdampfungsprozess vorwärmt. In dieser Ausführungsform der Anlage wird eine Energierückführung betrieben, wie es bereits bei einer Ausführungsform eines erfindungsgemäßen Verfahrens beschrieben wurde. Der entstehende Wasserdampf wird über eine Leitung einem Wärmetauscher zugeführt, welcher dann wiederrum in das Verfahren eingeführte Bohrspülung vor deren Aufbereitung vorwärmt.

Des Weiteren ist günstiger Weise vorgesehen, dass eine Leitung vorgesehen ist, die den beim Verdampfen entstehenden Wasserdampf in einen Kondensator einleitet. Auch ein nachgeschalteter Prozess, bei dem, aus dem während des Aufbereitungsverfahrens entstehenden Wasserdampf wieder flüssiges Wasser zurück gewonnen wird, wurde bereits als eine Ausführungsform eines erfindungsgemäßen Verfahrens beschrieben. Zur Durchführung dieses Verfahrensschrittes der Kondensation des Wasserdampf ist in dieser Ausführungsform eine erfindungsgemäßen Anlage eine Leitung vorgesehen die den Wasserdampf in einen Kondensator einleitet.

Erfindungsgemäß ist vorgesehen, dass ein Tank vorgesehen ist, der die Bohrspülung vor der Zuführung auf das Transportelement zwischenlagert und welcher Homogenisierungselemente wie beispielsweise Rührer enthält, die die Homogenität der Bohrspülung aufrechterhalten. In dieser Ausführungsform einer Anlage wird die Bohrspülung vor der Aufbereitung in einen Tank gefüllt und dort bewegt bzw. homogenisiert. Diese Zwischenlagerung stellt sicher, dass die in der Bohrspülung befindlichen Feststoffe stets gleichbleibend und gleichmäßig in der Bohrspülung verteilt vorliegen. Weiterhin bietet das Vorsehen eines Tankes den Vorteil, dass größere Mengen an Bohrspülung der Aufbereitungsanlage auf einmal zugeführt und somit dort zwischengespeichert werden können. So können beispielsweise Lastwagen ihre gesamte Ladung auf einmal an der Aufbereitungsanlage übergeben und ohne unnötige Wartezeit ihr nächstes Ziel ansteuern. Der Tank bildet einen Zwischenspeicher und führt der Anlage nur soviel Bohrspülung pro Zeit zu wie sie verarbeiten kann.

In einer vorteilhaften Ausgestaltung ist vorgesehen, dass die Vorrichtung zum Entfernen des nach der Verdampfung des Wasseranteils auf dem Transportelement zurückgebliebenen Feststoffanteils bürstenartig ausgebildet ist. Der Feststoffanteil wird in dieser Ausführungsform einer erfindungsgemäßen Anlage von einer bürstenartig gestalteten Vorrichtung vom Transportelement entfernt. Eine solche bürstenartige Ausbildung hat den Vorteil, dass viele einzelne Borsten der Bürste die Oberfläche des Transportelementes aus verschiedenen Winkeln abkratzen und so für eine besonders gründliche Entfernung des Feststoffanteils sorgen. Dabei kann die bürstenartig ausgebildete Vorrichtung entweder in sich unbewegt sein oder sich auch selbst bewegen. Im ersten Fall wird das Entfernen oder Abkratzen des Feststoffanteils vom Transportelement nur durch die Bewegung des Transportelement des relativ zu der feststehenden, bürstenartigen Vorrichtung verursacht. Im zweiten Fall bewegt sich neben dem Transportelement auch die bürstenartigen ausgestaltete Vorrichtung, was im Vergleich zum ersten Fall zu einer erhöhten Relativbewegung zwischen beiden Elementen führt, was wiederrum eine verbesserte Reinigung des Transportelement des bzw. ein verbessertes Entfernen des Feststoffanteil bewirkt. Die Erfindung ist aber nicht auf eine bürstenartige Ausführung der Vorrichtung zum Entfernen des Feststoffanteils vom Transportelement beschränkt. Vielmehr sind auch andere Ausführungsformen einer solchen Entfernvorrichtung denkbar wie beispielsweise als Schaber, Sauger, eine Pressluftanlage, Rüttler oder Laser.

Des Weiteren ist in dem Vorschlag vorteilhafterweise vorgesehen, dass das Sammelelement wannenförmig ausgebildet ist und zur Entnahme des abgetrennten Feststoffanteils aus der Anlage entfernt wird. Ein wannenförmig gestaltetes Sammelelement ist technisch einfach und kostengünstig. Der Feststoffanteil fällt nach der Abtrennung vom Transportelement in das Sammelelement. Ist das Fassungsvermögen des wannenförmig ausgebildeten Sammelelementes erreicht, wird es aus der Anlage entnommen, ausgelehrt und wieder in die Anlage eingebracht. Es ist auch möglich mehrere gleichartige Sammelelemente vorzusehen, die direkt gegeneinander ausgetauscht werden, sobald das in der Anlage befindliche Sammelelement mit Feststoffanteil gefüllt ist.

Geschickter Weise ist vorgesehen, dass das Sammelelement förderbandartig oder als Schneckenförderer ausgebildet ist und den abgetrennten Feststoffanteil kontinuierlich aus der Anlage entfernt. In dieser Ausführungsform wird der Feststoffanteil in einem kontinuierlichen Prozess aus der Anlage entfernt. Dies hat den Vorteil, dass es nicht vorkommen kann, dass ein Sammelelement bereits mit Feststoffanteil gefüllt ist und ungewollt in der Anlage verbleibt. Durch kontinuierliches Entfernen des Feststoffanteils aus der Anlage entfällt der in bestimmten zeitlichen Abständen stattfindende Entnahmeprozess, wie er bei Verwendung eines zuvor beschriebenen wannenförmig ausgebildeten Sammelelementes erforderlich ist. Realisiert werden kann ein kontinuierlicher Entnahmeprozess für den Feststoffanteil beispielsweise durch ein als Förderband oder Schneckenförderer ausgebildetes Sammelelement, die Erfindung ist aber nicht auf diese beiden Ausführungsformen beschränkt.

Erfindungsgemäß ist vorgesehen, dass das Transportelement als Förderband ausgebildet ist, welches sich über mehrere Umlenkrollen in einem geschlossenen Kreislauf durch die Anlage bewegt. Ein als Förderband ausgebildetes Transportelement stellt einen idealen, flexiblen Träger für die aufzubereitende Bohrspülung dar und ermöglicht einen stabil funktionierenden Transport der Bohrspülung durch die gesamte Aufbereitungsanlage. Ein über mehrere Umlenkrollen geführtes Förderband kann in einem geschlossenen Kreislauf in einfacher Weise durch die verschiedenen Anlagenstufen geführt werden. Zur besseren Aufnahme der Bohrspülung auf dem förderbandartig ausgebildeten Transportelement ist dessen Oberfläche so gestaltet, dass möglichst viel der wässrigen Bohrspülung daran haften bleibt. Als besonders günstig hat sich dabei ein wabenförmiger Aufbau des förderbandartig ausgebildeten Transportelement des herausgestellt. Die Waben sorgen für eine stark vergrößerte Oberfläche des Transportelementes pro Längeneinheit, was dazu führt dass eine deutlich größere Menge an einer Längeneinheit des Transportelementes haften bleibt, als es bei anderen Oberflächengeometrien möglich wäre. Zudem bietet sich so die Möglichkeit, durch Anpassung von Wabengröße und Wabenform ein optimales Transportelement für verschiedene Viskositäten der Bohrspülung zu schaffen. Verschiedene Viskositäten entstehen bei unterschiedlich großem Feststoffanteil in der Bohrspülung. Somit ist beispielsweise die Viskosität eines mit größerem Feststoffanteil beladenen Bohrschlammes deutlich höher als die Viskosität einer Bohrspülung mit geringerem Feststoffanteil. Eine Anpassung des Transportelementes über die Wabengeometrie an die jeweils vorliegende Viskosität der Bohrspülung oder des Bohrschlammes trägt somit dazu bei, den Wirkungsgrad der Aufbereitungsanlage zu erhöhen, da so immer die optimale Menge an Material an dem förderbandartig ausgebildeten Transportelement haften bleibt. Da das Transportelement auch den Verdampfer passieren muss, in dem höhere Temperaturen herrschen, ist es günstig, das förderbandartige Transportelement aus metallischen Werkstoffen herzustellen. Selbstverständlich sind auch andere Werkstoffe zur Herstellung des Transportelementes geeignet, solange sie die dazu nötige Temperaturfestigkeit aufweisen. Die Führung eines förderbandartig ausgebildeten Transportelementes in einem geschlossenen Kreislauf durch die Anlage bringt alle Vorteile eines kontinuierlichen Aufbereitungsprozesses: die Menge an Bohrspülung, die pro Zeit aufbereitet werden kann ist optimiert, da keine Stillstandszeiten der Anlage für den Weitertransport von Material von einem Schritt zum nächsten erforderlich sind. Weiterhin erfordert ein kontinuierlicher Prozess weniger Aufmerksamkeit und Handlungsbedarf des Bedienpersonals, was wiederum die Qualität des mit der Anlage durchgeführten Verfahrens verbessert. Unter einem kontinuierlichen Prozess ist nicht zwingend zu verstehen, dass sich das förderbandartig ausgebildete Transportelement zu jeder Zeit bewegen muss. Vielmehr ist auch ein intervallweises, möglicherweise automatisch gesteuertes Bewegen des Transportelementes mit zur Erfindung gehörend.

Erfindungsgemäß ist vorgesehen, dass das Aufbringen der Bohrspülung auf dem als Förderband ausgeführten Transportelement durch Eintauchen des Förderbandes in den, die Bohrspülung enthaltenen Tank erfolgt. Dieser Eintauchvorgang ist technisch besonders einfach und führt vor allem in Kombination mit einem wabenförmigen Aufbau des Transportelementes zu einer sehr guten und gleichmäßigen Benetzung des Transportelementes mit Bohrspülung. Das Transportelement wird einfach über eine gewisse Zeit durch die flüssige Bohrspülung bewegt und anschließend aus dieser herausgezogen und weitertransportiert. Diese Ausführungsform ermöglicht gleichzeitig die Umgehung von Problemen anderer Ausführungsformen von Vorrichtungen zum Aufbringen von Bohrspülung auf dem Transportelement wie zum Beispiel dem Verstopfen von Sprühdüsen.

Geschickter Weise ist vorgesehen, dass auf einer oder zwei Seiten des als Förderband ausgeführten Transportelementes Heizelemente zum Verdampfen des Wasseranteils der Bohrspülung vorgesehen sind. Die Heizelemente stellen die Energie für die Verdampfung des Wasseranteils der Bohrspülung bereit. Dazu ist es besonders günstig die Heizelemente in der Nähe der Bohrspülung, d.h. auch in der Nähe des Transportelementes zu platzieren. Dabei kann eine Platzierung der Heizelemente sowohl nur auf der einen Seite des Transportelementes als auch auf allen beiden Seiten günstig sein. Die gewählte Ausführungsform hängt dabei von der Bauart und der Größe des Verdampfers ab. Unter dem Begriff Seite des Transportelementes sind hier die flächenmäßig größeren Seiten zu verstehen. Bei einer förderbandartigen Ausführung des Transportelementes sind das die Ober- und Unterseite, die eine deutlich größere Fläche aufweisen als die Seitenkanten.

Des Weiteren ist vorgesehen, dass die Heizelemente direkt auf das als Förderband ausgeführte Transportelement ausgerichtet sind und die Heizelemente die Verdampfung des Wasseranteils größtenteils durch direkte Infrarotstrahlung bewirken. Wie bereits weiter oben beschrieben ist eine möglichst gute Wärmeübertragung von den Heizelementen auf das Transportelement für einen guten Wirkungsgrad der Aufbereitungsanlage anzustreben. Dazu gehört auch eine direkte Ausrichtung der Heizelemente auf das Transportelement. Als besonders günstig für eine erfindungsgemäße Anlage hat sich die Verwendung von Infrarotstrahlung zur Wärmeübertragung auf die Bohrspülung erwiesen. Selbstverständlich ist aber auch die Nutzung von Wärmekonvektion, wie beispielsweise durch heiße Luft oder direkter Wärmeübertragung, wie beispielsweise durch eine elektrische Beheizung des Transportelementes möglich um den Wasseranteil zu verdampfen.

In einer vorteilhaften Ausgestaltung ist vorgesehen, dass eine Steuerung vorgesehen ist, die wenigstens einen der Sensoren der Art
- Sensor für die Viskosität der Bohrspülung im Tank,
- Sensor für den Füllstand der Bohrspülung im Tank,
- Sensor für das Antriebsmoment für das Transportelement,
- Sensor für den Wassergehalt der Abluft nach dem Verdampfer,
- Sensor für die Temperatur nach dem Verdampfer,
- Sensor für die Temperatur in der ersten Heizstufe,
- Sensor für die Temperatur in der zweiten Heizstufe,
- Sensor für die Restfeuchtigkeit des Feststoffanteils nach dem Verdampfer,
- Sensor für die Luftfeuchtigkeit außerhalb der Anlage und Sensor für die Temperatur außerhalb der Anlage
- aufweist und die mindestens eine der Stellgrößen der Art
- Stellgröße für die Geschwindigkeit des Transportelementes,
- Stellgröße für die Heizleistung der ersten Heizstufe,
- Stellgröße für die Heizleistung der zweiten Heizstufe,
- Stellgröße für die Umwälzleistung der Homogenisierungselemente im Tank,
- und Stellgröße für die Leistung der Lüfter aufweist
wobei die Steuerung die mindestens eine Stellgröße basierend auf den durch den mindestens einen Sensor zur Verfügung gestellten Informationen regelt. Durch das Vorsehen einer Steuerung, welche die Aufbereitungsanlage auf Basis von Sensorsignalen mithilfe von Stellgrößen regelt verbessert weiterhin die Qualität des, mit der Anlage ausgeführten Verfahrens. Eine automatische Steuerung kann eine Vielzahl von, über Sensoren gemessenen Informationen in eine angepasste Regelung der Anlage einfließen lassen. Diese Informationen werden dann innerhalb der Steuerung verarbeitet und die für den jeweiligen Anlagenzustand optimalen Stellgrößen berechnet und an die Anlage in einem Regelkreis weitergeleitet. Als besonders günstige Lieferanten für Eingangsinformationen zur Regelung einer Aufbereitungsanlage haben sich dabei die folgenden Sensoren gezeigt: Sensoren für die Viskosität der Bohrspülung liefern Informationen über den Feststoffgehalt in der Bohrspülung. Füllstandssensoren im Vorratstank der Bohrspülung geben Informationen dazu, ob noch ausreichend Bohrspülung vorhanden ist oder ob weitere Bohrspülung eingefüllt werden muss. Sensoren für das Antriebsmoment, welches benötigt wird das Transportelement zu bewegen, geben Aufschluss darüber ob das Transportelement ordnungsgemäß funktioniert oder ob unter Umständen Störungen wie Verschmutzungen oder Verklemmungen vorliegen. Sensoren für Wassergehalt und Temperatur der Abluft nach den Verdampfer geben Aufschluß über die Qualität des Verdampfungsprozesses. Sensoren in den Heizstufen zeigen deren Betriebszustand und können auch auf eventuelle Störungen der Heizstufen hinweisen. Sensoren zur Messung der Restfeuchtigkeit des Feststoffanteils nach dem Verdampfer zeigen, ob ausreichend Wasseranteil aus der Bohrspülung im Verdampfer entfernt wurde. Schließlich geben Sensoren für Luftfeuchtigkeit und Temperatur der Umgebungsluft außerhalb der Anlage geeignete Referenzwerte zu den innerhalb der Anlage gemessenen Werten ab. Als besonders günstige Stellgrößen für eine automatische Regelung einer erfindungsgemäßen Aufbereitungsanlage haben sich die Folgenden herausgestellt: eine Stellgröße für die Geschwindigkeit des Transportelementes ermöglicht eine direkte Regelung der von der Anlage pro Zeiteinheit aufbereiteten Menge an Bohrspülung. Stellgrößen für die Heizleistung der unterschiedlichen Heizstufen ermöglichen ebenfalls eine Beeinflussung der Menge der aufbereiteten Bohrspülung pro Zeit. Weiterhin bieten Stellgrößen für die Umwälzleistung der Homogenisierungselemente die Möglichkeit die Viskosität der Bohrspülung zu beeinflussen. Schließlich ermöglichen Stellgrößen für die Leistung der Lüfter eine Einflussnahme auf die Temperaturverteilung im Verdampfer, sowie den auf den Abtransport des Dampfes aus der Anlage hinaus. Selbstverständlich ist es möglich auch weitere und andersartige Sensoren oder Stellgrößen in Zusammenhang mit einer Steuerung für eine Aufbereitungsanlage einzusetzen.

Die Aufgabe der Erfindung wird schließlich auch gelöst durch die Verwendung einer Anlage nach einer der beschriebenen Ausführungsformen zur Durchführung des Verfahrens nach einer der zuvor beschriebenen Ausführungsformen. Die Verwendung einer bereits beschriebenen Anlage zur Durchführung eines bereits beschriebenen Verfahrens ermöglicht in besonders günstiger Weise die umweltgerechte Entsorgung von Bohrspülungen oder Bohrschlämmen.
In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1: ein Flussdiagramm eines erfindungsgemäßen Verfahrens,
- Fig. 2: ein Flussdiagramm einer weiteren Ausführungsform eines erfindungsgemäßen Verfahrens,
- Fig. 3: ein detaillierteres Flussdiagramm einer weiteren Ausführungsform eines erfindungsgemäßen Verfahrens,
- Fig. 4a: eine schematische Darstellung einer Ausführungsform einer erfindungsgemäßen Anlage,
- Fig. 4b: eine Detailansicht des in Fig. 4a markierten Schnittes IV b,
- Fig. 5: eine Anlage, die nicht erfindungsgemäß ist.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

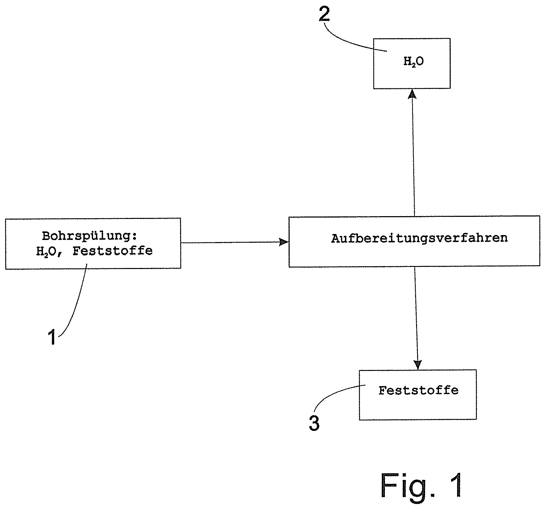

Fig. 1 zeigt ein Flussdiagramm eines erfindungsgemäßen Verfahrens. Auf der linken Seite ist die aufzubereitende Bohrspülung 1 zu sehen. Diese Bohrspülung besteht im Wesentlichen aus Wasser und aus Feststoffen. Bei den Feststoffen handelt es sich größtenteils um Bentonit, aber auch um andere Zuschlagsstoffe bzw. andere Stoffe, die während der Bohrung aus dem Erdreich ausgewaschen wurden. Ein erfindungsgemäßes Verfahren ist ebenfalls geeignet zur Aufbereitung von wässrigen Bohrschlämmen, die einen größeren Feststoffanteil aufweisen. Die gebrauchte Bohrspülung 1 wird dem Aufbereitungsverfahren zugeführt. Im Aufbereitungsverfahren wird die Bohrspülung 1 dann in einen Wasseranteil 2 und einen Feststoffanteil 3 aufgetrennt.

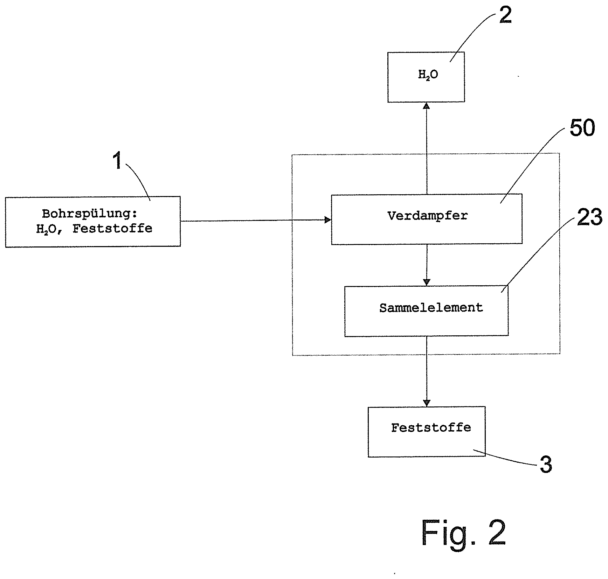

Fig. 2 zeigt ein Flussdiagramm einer weiteren Ausführungsform eines erfindungsgemäßen Verfahrens. Das Aufbereitungsverfahren ist hier durch zwei Anlagenelemente symbolisiert. Die links dargestellte Bohrspülung 1 wird einem Verdampfer 50 zugeführt, in dem die Trennung in einen Wasseranteil 2 und einen Feststoffanteil 3 Durch Verdampfen des Wassers erfolgt. Der bei der Verdampfung zurückbleibende Feststoffanteil 3 wird nach dem Verdampfer 50 zunächst in einem Sammelelement 23 gesammelt. Die Entnahme des Feststoffanteils 3 aus dem Aufbereitungsverfahren erfolgt dann aus diesem Sammelelement 23. Dabei kann die Entnahme des Feststoffanteils in einem kontinuierlichen Prozess erfolgen, wie beispielsweise durch ein als Förderband oder als Schneckenförderer ausgebildetes Sammelelement 23. Es ist jedoch ebenfalls möglich, dass das Sammelelement 23 zur Entnahme des Feststoffanteils 3 aus dem Aufbereitungsverfahren nach Bedarf in bestimmten zeitlichen Abständen entleert wird. In dieser Ausführungsform könnte das Sammelelement 23 beispielsweise als bewegliche Auffangwanne oder als Auffangwagen ausgebildet sein. Beide Ausführungsformen eines Sammelelementes 23 haben Vor- und Nachteile. Ein kontinuierlich arbeitendes Sammelelement 23 ermöglicht eine höhere Ausbringungsmenge an Feststoffanteil 3 pro Zeit und reduziert die Gefahr, dass sich zu viel Feststoffanteil 3 in der Anlage ansammelt. Dafür ist ein kontinuierlich arbeitendes Sammelelement 23 aufwändiger in der Herstellung und Wartung. Ein nicht kontinuierlich arbeitendes Sammelelement 23, wie beispielsweise eine bewegliche Auffangwanne, ist einfacher aufgebaut. Nachteilig an dieser Ausführungsform ist, dass unter Umständen der Aufbereitungsprozess während der Entnahme des Feststoffanteils angehalten werden muss oder dass Feststoffe in nicht dafür vorgesehene Anlagenbereiche gelangen, wenn das Sammelelement nicht rechtzeitig ausgeleert wird. Erfindungsgemäß sind beide Ausführungsformen oder auch eine Kombination daraus denkbar. Die Auswahl der Ausführung wird individuell je nach den vorliegenden Rahmenbedingungen erfolgen.

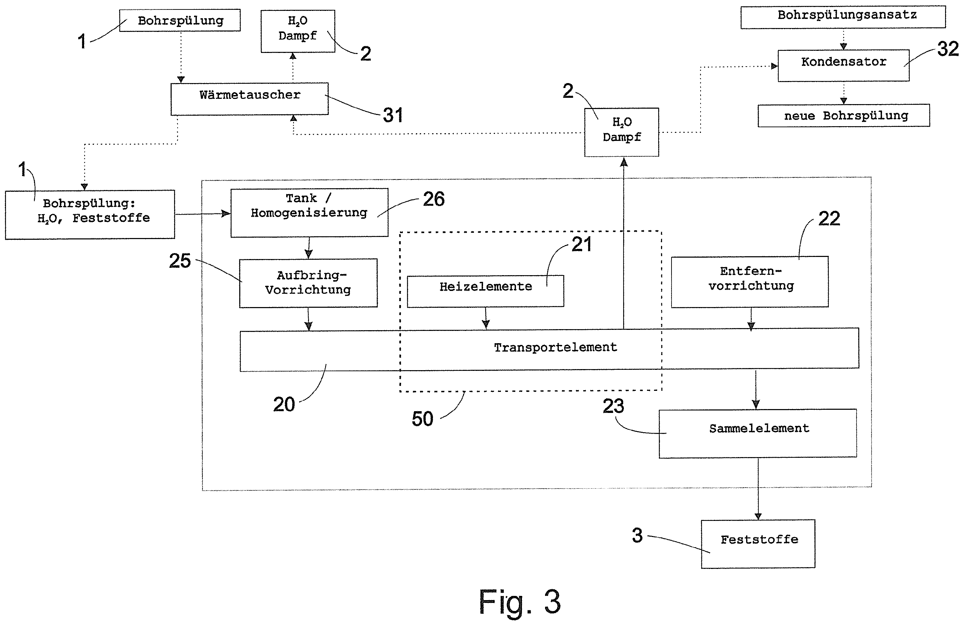

Fig. 3 zeigt ein detaillierteres Flussdiagramm einer weiteren Ausführungsform eines erfindungsgemäßen Verfahrens. In dieser Darstellung werden weitere Einzelheiten eines erfindungsgemäßen Aufbereitungsverfahrens dargestellt. Auf der linken Seite ist als Ausgangspunkt des Verfahrens wieder die gebrauchte, aufzubereitende Bohrspülung 1 dargestellt. Selbstverständlich kann auch hier statt einer Bohrspülung ein Bohrschlamm dem Aufbereitungsverfahren zugeführt werden. Die Bohrspülung 1 wird zunächst in einen Tank 26 gefüllt, wo eine Homogenisierung stattfindet. Diese Homogenisierung stellt sicher, dass die sich in der Bohrspülung befindenden Feststoffe gleichmäßig in der Flüssigkeit verteilt sind. Die Homogenisierung der Bohrspülung kann über verschiedene Anlagenelemente, wie beispielsweise Rührer, Mischer oder Umwälzpumpen realisiert werden. Geeignet sind alle Elemente, die für eine reproduzierbare, kontinuierliche Durchmischung der Bohrspülung verwendet werden können. Im nächsten Verfahrensschritt wird die Bohrspülung einer Vorrichtung zugeführt, welche die Bohrspülung auf ein Transportelement 20 aufbringt. Diese Aufbringungsvorrichtung 25 ist dabei so beschaffen, dass die Bohrspülung gleichmäßig über eine Fläche des Transportelementes 20 ausgebreitet wird. Eine derartige Aufbringungsvorrichtung 25 kann dabei beispielsweise durch Sprühdüsen realisiert werden, die die Bohrspülung fein zerstäubt auf dem Transportelement 20 verteilen. Darüber hinaus sind aber auch Aufbringvorrichtungen 25 möglich, die auf anderen technischen Konzepten beruhen. So kann die Aufbringvorrichtung 25 auch von einem Tauchbecken gebildet werden, in welches das Transportelement 20 zunächst eingetaucht und dann wieder herausbewegt wird. Die Aufbringung von Bohrspülung 1 auf dem Transportelement 20 erfolgt in diesem Fall durch ein Haftenbleiben der Bohrspülung 1 auf der Oberfläche des Transportelementes 20.
Das Transportelement 20 hat im Wesentlichen die Aufgabe, die Bohrspülung 1 von einem Schritt des Aufbereitungsverfahrens zum nächsten Schritt zu transportieren. Die von der Aufbringvorrichtung 25 aufgebrachte Bohrspülung 1 wird vom Transportelement 20 zunächst zum Verdampfer 50 transportiert. Im Verdampfer 50 sind Heizelemente 21 vorgesehen, die die Bohrspülung 1 erhitzen und deren Wasseranteil 2 verdampfen. Diese Heizelemente 21 können die benötigte Wärmeenergie dabei durch verschiedene Konzepte bereitstellen. Denkbar sind hier beispielsweise Verbrennungsöfen oder -düsen für gasförmige oder flüssige Brennstoffe. Weiterhin können auch elektrisch betriebene Heizelemente, Heizelemente, die Fernwärme oder Konvektion nutzen oder aber solargetriebene Heizelemente wie Parabolspiegel oder Ähnliches eingesetzt werden. Der Wasseranteil 2 wird aus dem Prozessschritt abgeführt und der Feststoffanteil 3 verbleibt zunächst auf dem Transportelement 20, welches sich anschließend zu einem Element zum Entfernen des Feststoffanteils 3 weiterbewegt. Dieses Entfernelement 22 hat zur Aufgabe, den auf dem Transportelement haftenden Feststoffanteil 3 der Bohrspülung wieder vom Transportelement 20 zu entfernen und aus dem Aufbereitungsverfahren abzuführen. Die Entfernung des Feststoffanteils 3 vom Transportelement 20 kann beispielsweise durch ein bürstenartig gebildetes Entfernelement 22 erfolgen. Eine bürstenartige Ausbildung, möglicherweise sogar mit Borsten unterschiedlicher mechanischer Beschaffenheit und Festigkeit gewährleistet eine gründliche Entfernung des Feststoffanteils 3. Das Entfernelement 22 kann dabei beweglich oder unbeweglich ausgebildet sein. Da sich das Transportelement 20 bewegt liegt bereits zwischen dem Transportelement 20 und einem unbeweglichen Entfernelement 22 eine Relativbewegung vor. Ein gründlicheres Entfernen des Feststoffanteils 3 vom Transportelement 20 kann allerdings durch ein sich bewegendes Entfernelement 22 erreicht werden, da hier die auf den Feststoffanteil wirkende Relativbewegung größer als bei einem ruhenden Entfernelement 22 sind. Eine mögliche Ausführungsform eines solchen, sich bewegenden Entfernelementes 22 sind eine oder mehrere rotierende Bürsten.

Nach dem Entfernen des Feststoffanteils 3 vom Transportelement 20 wird der Feststoffanteil 3 zunächst von einem Sammelelement 23 aufgenommen. Die Aufgabe und mögliche Ausführungsformen eines solchen Sammelelementes 23 wurden bereits weiter oben im Zusammenhang mit Fig. 2 beschrieben, diese Ausführungen gelten auch für das in Fig. 3 gezeigte Sammelelement 23. Der Feststoffanteil 3 wird dann abschließend mithilfe des Sammelelementes 23 aus dem Aufbereitungsprozesses entfernt.
Der Wasseranteil 2 der Bohrspülung 1 wird aus dem Verdampfer 50 abgeführt. In Fig. 3 sind zwei Möglichkeiten dargestellt, den entstehenden Wasserdampf im Aufbereitungsverfahren weiter zu nutzen. Die beiden Möglichkeiten können unabhängig voneinander oder auch in Kombination miteinander realisiert werden. Auf der rechten Seite wird der Wasseranteil 2 in Form von Dampf einem Kondensator 32 zugeführt. Im Kondensator 32 wird der Wasserdampf wieder in flüssiges Wasser umgewandelt und zur Anmischung neuer Bohrspülung verwendet. Das kondensierte Wasser wird dazu einem Bohrspülungsansatz, welcher die Feststoffe, wie beispielsweise Bentonit für eine neue Bohrspülung enthält zugeführt. Ein wesentlicher Vorteil dieses Verfahrensschrittes ist der, dass kein neues Wasser für den Ansatz einer neuen Bohrspülung benötigt wird. Auf der linken Seite wird der dampfförmige Wasseranteil 2 einen Wärmetauscher 31 zugeführt. Im Wärmetauscher 31 wird ein Teil der Wärme des Wasserdampfes auf gebrauchte Bohrspülung 1 übertragen, um diese vor der Zuführung zum Aufbereitungsprozess vorzuwärmen. Dies hat den Vorteil, dass dann im Verdampfer 50 weniger Energie zur Verdampfung des Wasseranteils 2 benötigt wird. Im dargestellten Fall wird nach dem Wärmetauscher 31 der Wasseranteil 2 in Form von abgekühltem Dampf an die Atmosphäre abgegeben. Hier wäre allerdings auch eine Kombination mit dem rechts dargestellten Verfahrensschritt möglich, d.h. der Wasserdampf könnte nach dem Wärmetauscher 31 einem Kondensator 32 zugeführt werden um aus dem Wasserdampf wieder flüssiges Wasser zu gewinnen.

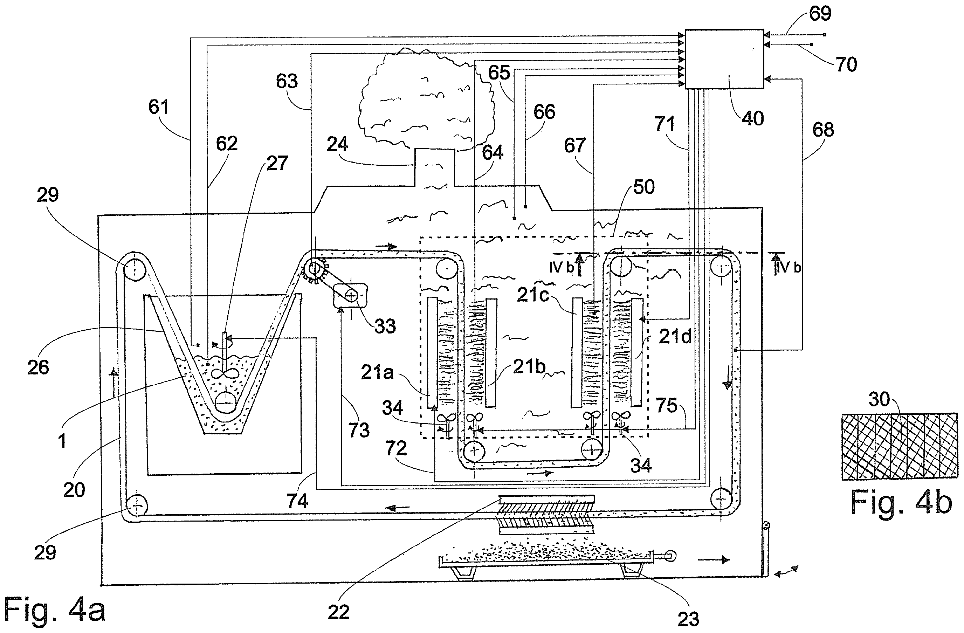

Fig. 4a zeigt eine schematische Darstellung einer Ausführungsform einer erfindungsgemäßen Anlage. In Fig. 4a sind zum einen Anlagenelemente einer Anlage zur Aufbereitung von Bohrspülung dargestellt, zum anderen wird die zur Regelung dieser Anlage benötigte Steuerung mit ihren Sensoren und Stellgrößen gezeigt.
Das Transportelement 20 ist in dieser Ausführungsform einer Anlage als umlaufendes Förderband ausgebildet. Dieses Förderband ist wabenförmig aufgebaut (siehe dazu Fig. 4b, die den Schnitt IV b darstellt), um eine möglichst große Oberfläche bereitzustellen. Dieses Förderband wird hier über ein Getriebe vom Antriebsmotor 33 angetrieben und in einem geschlossenen Kreislauf durch die Anlage bewegt. Geführt wird dieses förderbandartig ausgebildete Transportelement 20 von mehreren Umlenkrollen 29. Die gebrauchte Bohrspülung 1, die aufbereitet werden soll, befindet sich im Tank 26 auf der linken Seite der Anlage. Damit die Bohrspülung im Tank homogen bleibt, d.h. damit die darin befindlichen Feststoffe gleichmäßig darin verteilt sind, ist ein Homogenisierungselement 27 in Form eines Rührers vorgesehen. Das förderbandartig ausgebildete Transportelement 20 wird über eine Führungsrolle durch den Tank 26 geführt, in dem sich auch die Bohrspülung 1 befindet. Das Transportelement 20 wird somit in die Bohrspülung 1 getaucht und durch diese hindurch geführt. Dabei verbleibt Bohrspülung 1 auf dem Transportelement 20 und wird so den folgenden Verfahrensschritten zugeführt. Vom Tank 26 wird das mit Bohrspülung 1 benetzte Transportelement 20 in den Verdampfer 50 bewegt. In Fig. 4 enthält dieser Verdampfer 50 eine erste Heizstufe mit den beiden Heizelementen 21a und 21b sowie zwei Lüftern 34. Nach der ersten Heizstufe ist in Laufrichtung des Transportelementes 20 eine zweite Heizstufe mit den Heizelementen 21c und 21d, sowie den Lüftern 34 angeordnet. Es ist selbstverständlich auch möglich erfindungsgemäße Verdampfer 50 zu verwenden die nur eine Heizstufe oder auch mehrere Heizstufen enthalten. Das mit Bohrspülung 1 benetzte der Transportelement 20 wird nun zunächst durch die erste Heizstufe und anschließend durch die zweite Heizstufe bewegt, wobei der Wasseranteil 2 der Bohrspülung 1 verdampft und aus dem Verdampfer 50 abgeführt wird. Die Heizelemente 21a, 21b, 21c, 21d stellen dabei die für die Verdampfung benötigte Wärmeenergie zur Verfügung. Im dargestellten Fall werden die Heizelemente 21a, 21b, 21c, 21d von Brennerelementen gebildet, in denen gasförmige oder flüssige Brennstoffe verbrannt werden. Allerdings sind auch andersartig gestaltete Heizelemente 21a, 21b, 21c, 21d mit zur Erfindung gehörend wie beispielsweise elektrische Heizelemente. Für eine bessere Wärmeverteilung im Verdampfer 50 sind mehrere Lüfter 34 vorgesehen, deren erzeugter Luftstrom auch den bereits verdampften Wasseranteil 2 nach oben aus dem Verdampfer 50 treibt. In Fig. 4a wird der verdampfte Wasseranteil 2 über den Kamin 24 in die Atmosphäre abgegeben. Es wäre an dieser Stelle aber auch möglich den Wasserdampf weiteren Prozessschritten zuzuführen, wie es beispielsweise in Fig. 3 dargestellt und weiter oben beschrieben ist. Nach der Durchführung des Transportelementes 20 durch den Verdampfer 50 befindet sich im Wesentlichen nur noch der Feststoffanteil 3 mit einer geringen Restfeuchtigkeit auf dem Transportelement 20. Das Transportelement 20 wird nun über weitere Umlenkrolle 29 zu einem bürstenförmig ausgebildeten Entfernelement 22 weiter bewegt. Dieses Entfernelement 22 bürstet den Feststoffanteil 3 vom förderbandartig ausgebildeten Transportelement 20 ab, so dass der Feststoffanteil 3 in das Sammelelement 23 fällt. Durch die vielen Borsten des bürstenartig ausgebildeten Entfernelementes 22 ist sichergestellt, dass der gesamte Feststoffanteil 3 vom Transportelement 20 abgebürstet und entfernt wird. Im dargestellten Fall ist das Entfernelement 22 unbeweglich und das Abtrennen des Feststoffanteils 3 vom Transportelement 20 erfolgt nur durch die Bewegung des Transportelementes 20. Es wäre hier auch möglich das Entfernelement 22 so zu gestalten, dass es sich selbst bewegt um eine noch gründlichere Entfernung des Feststoffanteils 3 vom Transportelement 20 sicherzustellen. So könnte das Entfernelement 22 beispielsweise als rotierendes Bürstenpaar ausgebildet sein, wobei die beiden Bürsten sich entweder im Gleichlauf oder im Gegenlauf zueinander bewegen können. Selbstverständlich sind auch noch andere Ausführungsformen des Entfernelementes 22 mit zur Erfindung gehörend. So könnte der Feststoffanteil 3 beispielsweise auch über Pressluftdüsen entfernt werden oder das Transportelement 20 in geringen Radien zickzackförmig über mehrere Führungsrollen in bewegt werden, so dass der Feststoffanteil 3 vom Transportelement 20 durch die Biegungen abplatzt. Das Sammelelement 23 ist in Fig. 4a als bewegliche Auffangwanne gestaltet. Sobald diese Auffangwanne mit abgebürstetem Feststoffanteil 3 gefüllt ist, wird diese über eine auf der rechten Seite dargestellte Klappe entfernt, ausgelehrt und leer wieder in die Anlage eingebracht. Anstelle der hier gezeigten Ausführungsform des Sammelelementes 23 als Auffangwanne könnte das Sammelelement 23 auch als kontinuierlich arbeitendes Anlagenelement gestaltet werden, wie beispielsweise als Förderband oder als Schneckenförderer. Nachdem das Transportelement 20 das Entfernelement 22 passiert hat ist es gereinigt vom Feststoffanteil 3 und beginnt seinen Kreislauf von neuem, indem es wieder in den Tank 26, der mit Bohrspülung 1 gefüllt ist, getaucht wird.

Die in Fig. 4a oben rechts dargestellte Steuerung regelt den Betrieb der Aufbereitungsanlage für Bohrspülungen 1. Es sind mehrere Sensoren an die Steuerung angeschlossen, deren Anbindung an die Steuerung 40 durch Linien dargestellt ist, die einen zur Steuerung 40 hin weisenden Pfeil aufweisen. Der Sensor 61 dient dazu, den Füllstand der Bohrspülung 1 im Tank 26 zu bestimmen. Befindet sich zu wenig Bohrspülung 1 im Tank 26, wird ein Alarm ausgelöst bzw. automatisch Bohrspülung 1 nachgefüllt. Der Sensor 62 dient der Messung der Viskosität der Bohrspülung 1 im Tank 26. Die Viskosität gibt Aufschluss über den Gehalt des Feststoffanteils 3 in der Bohrspülung 1 und liefert somit Informationen über die auf das Transportelement 20 aufgebrachte Menge an Feststoffanteil 3. Der Sensor 63 misst das Drehmoment, welches vom Antriebsmotor 33 zur Verfügung gestellt werden muss, um das Transportelement 20 durch die Anlage zu bewegen. Ein plötzlicher Anstieg dieses gemessenen Drehmomentes gibt beispielsweise Aufschluss über eine Störung im Verfahrensablauf. Sensor 65 misst die Temperatur der Abluft nach dem Verdampfer 50, Sensor 66 misst den Wassergehalt dieser Abluft. Die beiden Sensoren 64 und 67 messen die Temperatur in der ersten bzw. zweiten Heizstufe des Verdampfers 50. Sensor 68 misst die Restfeuchtigkeit des auf dem Transportelement 20 verbleibenden Feststoffanteils 3. Die beiden Sensoren 69 und 70 messen die Temperatur und den Wassergehalt der Umgebungsluft der Anlage welche als Referenzwerte zu Temperatur und Wassergehalt der Abluft nach dem Verdampfer 50 dienen. Neben den Sensoren weist die Steuerung 40 mehrere Stellgrößen auf. Die Anbindung der Stellgrößen an die Steuerung ist durch Linien mit Pfeilen dargestellt, die auf das jeweils beeinflusste Anlagenelement weisen. Die Stellgrößen 73 beeinflusst die Leistung des Antriebsmotors 33 und somit die Geschwindigkeit des Transportelement des 20 durch die Anlage. Die Stellgrößen 72 und 71 beeinflussen die Heizleistung der ersten Heizstufe bzw. der zweiten Heizstufe des Verdampfers 50. Die Stellgröße 74 beeinflusst die Umwälzleistung der Homogenisierungselemente 27 für die Bohrspülung 1 im Tank 26. Die Stellgröße 75 beeinflusst die Leistung der Lüfter 34 im Verdampfer 50. In Fig. 4 ist nur eine Leitung für diese Stellgröße dargestellt, die alle vier vorhandenen Lüfter 34 beeinflusst. Hier ist es selbstverständlich auch möglich Stellgrößen für jeden Lüfter 34 einzeln vorzusehen.

Fig. 4b zeigt eine Detailansicht des in Fig. 4a markierten Schnittes IV b. In dieser Ansicht ist eine Draufsicht des als Förderband ausgebildeten Transportelementes 20 zu sehen. Dieses Förderband ist aus beweglich miteinander verbundenen, einzelnen Segmenten aufgebaut, die in der Zeichnungsansicht in vertikaler Richtung verlaufen. Die einzelnen Segmente sind in sich aus einzelnen Waben 30 aufgebaut. Dieser Aufbau dient dazu, die Oberfläche des förderbandartig aufgebauten Transportelementes 20 zu vergrößern und somit den Transport einer möglichst großen Menge an Bohrspülung 1 pro Längeneinheit des Transportelementes 20 zu ermöglichen.

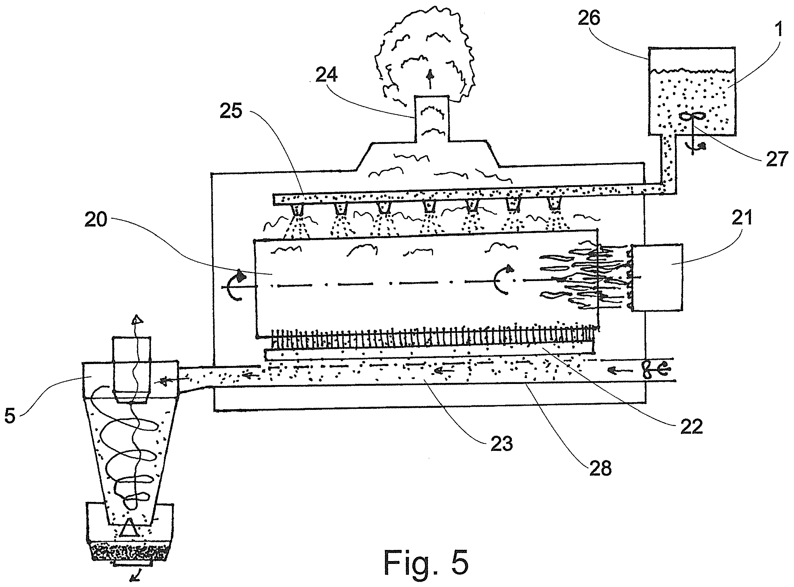

Fig. 5 zeigt eine weitere Ausführungsform einer Anlage, die nicht erfindungsgemäß ist. Im Unterschied zu der in Fig. 4 gezeigten ist in Fig. 5 das Transportelement 20 als rotierende Trommel ausgebildet, die von innen vom Heizelement 21 beheizt wird. Die gebrauchte, aufzubereitende Bohrspülung 1 ist im oben rechts dargestellten Tank 26 gespeichert. Im Tank 26 angeordnet befindet sich ein Homogenisierungselement 27, welches die Aufgabe hat, für eine gleichmäßige Verteilung des Feststoffanteils 3 in der Bohrspülung 1 zu sorgen. Im dargestellten Fall ist dieses Homogenisierungs-element als Rührer ausgebildet, es sind aber selbstverständlich auch andere technische Ausführungsformen für das Homogenisierungselement 27 möglich, wie beispielsweise eingeblasene Luft oder Ähnliches. Vom Tank 26 wird die Bohrspülung 1 über eine Rohrleitung mehreren Sprühdüsen 25 zugeführt. Diese Sprühdüsen 25 verteilen die Bohrspülung gleichmäßig auf dem als rotierende Trommel ausgebildeten Transportelement 20. Da das Transportelement 20 von innen beheizt ist, beginnt der Wasseranteil 2 der aufgebrachten Bohrspülung 1 auf der Oberfläche des Transportelementes 20 zu verdampfen, während sich das als rotierende Trommel ausgebildet Transportelement 20 weiterdreht. Nach einer gewissen Zeit bzw. einem gewissen Drehwinkel des Transportelementes 20 ist der gesamte Wasseranteil 2 verdampft, so dass sich auf der Oberfläche des Transportelementes 20 nur noch der getrocknete Feststoffanteil 3 befindet. Die Beheizung der Trommel erfolgt durch das Heizelement 21, welches hier als Gasbrenner ausgebildet dargestellt ist. Weiterhin gehören auch andere technische Konzepte zur Beheizung einer Trommel von Innen zum Umfang der Erfindung, wie beispielsweise das Einblasen von in Elektroheizungen erwärmter Luft. Der bei der Verdampfung des Wasseranteils 2 entstehende Wasserdampf wird durch den Kamin 24 in die Atmosphäre abgeführt. Es wäre hier auch denkbar, den entstehenden Wasserdampf weiteren Prozessschritten zuzuführen. Neben den in den zu Fig. 3 beschriebenen Prozessschritten könnte der Wasserdampf beispielsweise auch in einer Dampfturbine in elektrischen Strom umgewandelt werden oder mit Hilfe eines Wärmetauschers zur Heizung einer Bauhütte oder Ähnlichem verwendet werden. Der auf dem Transportelement 20 befindliche Feststoffanteil 3 wird anschließend von einem unterhalb des Transportelementes 20 angeordneten Entfernelement 22 entfernt. Im dargestellten Fall ist das Entfernelement 22 als gegen das Transportelement 20 gedrückte Bürste ausgebildet. Selbstverständlich sind auch bei dieser Ausführungsform einer erfindungsgemäßen Aufbereitungsanlage anders konzipierte Entfernelemente 22 denkbar, mögliche Ausführungsformen sind in den Beschreibungen zu Fig.3 und Fig. 4a zu finden. Der von Transportelement 20 abgetrennte Feststoffanteil 3 wird im dargestellten Fall in einer Transportleitung 28 aufgenommen. In dieser Transportleitung 28 herrscht ein Luftstrom vor, der den abgetrennten Feststoffanteil aus der Aufbereitungsanlage heraus transportiert. Die Transportleitung 28 bildet in dieser Ausführungsform somit das Sammelelement 23 für den Feststoffanteil 3 der aufbereiteten Bohrspülung 1. Der den Feststoffanteil 3 enthaltende Luftstrom wird einem Zyklon-Abscheider 5 zugeführt, in dem der Feststoffanteil 3 wieder vom Luftstrom getrennt wird. Der abgetrennte Feststoffanteil 3 kann anschließend aus dem Zyklon-Abscheider 5 entnommen werden. Die Entnahme des Feststoffanteils 3 aus dem Luftstrom kann auch über andere geeignete Anlagenkomponenten erfolgen.

Abschließend umfasst die Erfindung ein Verfahren zur Aufbereitung einer wässrigen Bohrspülung (1) oder eines wässrigen Bohrschlamms, gemäß dem unabhängigen Anspruch 1.

Ein wie zuvor ausgeführtes Verfahren, wobei der im Verfahren entstehende Wasserdampf direkt an die Atmosphäre abgegeben wird.

Ein wie zuvor ausgeführtes Verfahren, wobei die im Verfahren entstehenden Feststoffe aus dem Feststoffanteil (3) entsorgt werden

Ein wie zuvor ausgeführtes Verfahren, wobei die im Verfahren entstehende Abwärme zur Erwärmung anderer Anlagen oder Einrichtungen, wie beispielsweise eines Baucontainers verwendet wird.

Ein wie zuvor ausgeführtes Verfahren, wobei die im Verfahren entstehende Abwärme bzw. der Energiegehalt des Wasserdampfes zum Vorwärmen der aufzubereitenden Bohrspülung (1) verwendet wird.

Ein wie zuvor ausgeführtes Verfahren, wobei das der Wasserdampf in den Vorlauf neuer Bohrspülung (1) kondensiert wird.

Ein wie zuvor ausgeführtes Verfahren, wobei das der im Verfahren entstehende Wasserdampf als Energieeintrag oder Materialeintrag für Folgeprozesse, wie beispielsweise eine Dampfturbine, verwendet wird.

Ein wie zuvor ausgeführtes Verfahren, wobei vor dem Verdampfen des Wasseranteils die Bohrspülung (1) homogenisiert wird.

Ein wie zuvor ausgeführtes Verfahren, wobei das gesamte Verfahren in einer mobilen Anlage erfolgt, die auch während des Transports, beispielsweise auf einem Lastwagen, arbeitet.

Die Erfindung umfasst des weiteren eine Anlage zur Aufbereitung einer wässrigen Bohrspülung (1) oder von wässrigem Bohrschlamm, gemäß dem unabhängigen Anspruch 4.

Eine wie zuvor ausgeführte Anlage, wobei ein Kamin (24) den aus der Bohrspülung verdampften Wasseranteil (2) in Form von Wasserdampf aus der Anlage in die Atmosphäre leitet.

Eine wie zuvor ausgeführte Anlage, wobei eine Leitung den beim Verdampfen entstehenden Wasserdampf einem Wärmetauscher (31) zuführt, wobei der Wärmetauscher (31) die aufzubereitende Bohrspülung (1) vor der Zuführung zum Verdampfungsprozess vorwärmt.

Eine wie zuvor ausgeführte Anlage, wobei eine Leitung vorgesehen ist, die den beim Verdampfen entstehenden Wasserdampf in einen Kondensator (32) einleitet.

Eine wie zuvor ausgeführte Anlage, wobei ein Tank (26) vorgesehen ist, der die Bohrspülung (1) vor der Zuführung auf das Transportelement (20) zwischenlagert und welcher insbesondere Homogenisierungselemente (27) wie beispielsweise Rührer enthält, die die Homogenität der Bohrspülung (1) aufrechterhalten.

Eine wie zuvor ausgeführte Anlage, wobei das Entfernelement (22) des nach der Verdampfung des Wasseranteils (2) auf dem Transportelement (20) zurückgebliebenen Feststoffanteils (3) bürstenartig ausgebildet ist.

Eine wie zuvor ausgeführte Anlage, wobei das Sammelelement (23) wannenförmig ausgebildet ist und zur Entnahme des abgetrennten Feststoffanteils (3) aus der Anlage entfernt wird.

Eine wie zuvor ausgeführte Anlage, wobei das Sammelelement (23) förderbandartig oder als Schneckenförderer ausgebildet ist und den abgetrennten Feststoffanteil (3) kontinuierlich aus der Anlage entfernt.

Eine wie zuvor ausgeführte Anlage, wobei das Transportelement (20) als Förderband ausgebildet ist welches sich über mehrere Umlenkrollen (29) in einem geschlossenen Kreislauf durch die Anlage bewegt.

Eine wie zuvor ausgeführte Anlage, wobei das Aufbringen der Bohrspülung (1) auf dem als Förderband ausgeführten Transportelement (20) durch Eintauchen des Förderbandes in den, die Bohrspülung enthaltenen Tank (26) erfolgt.

Eine wie zuvor ausgeführte Anlage, wobei auf einer oder zwei Seiten des als Förderband ausgeführten Transportelementes (20) Heizelemente (21) zum Verdampfen des Wasseranteils (2) der Bohrspülung vorgesehen sind.

Eine wie zuvor ausgeführte Anlage, wobei die Heizelemente (21) direkt auf das als Förderband ausgeführte Transportelement (20) ausgerichtet sind und die Heizelemente (21) die Verdampfung des Wasseranteils (2) größtenteils durch direkte Infrarotstrahlung bewirken.

Eine wie zuvor ausgeführte Anlage , wobei eine Steuerung (40) vorgesehen ist, die wenigstens einen der Sensoren der Art
- Sensor (62) für die Viskosität der Bohrspülung (1) im Tank (26),
- Sensor (61) für den Füllstand der Bohrspülung (1) im Tank (26),
- Sensor (63) für das Antriebsmoment für das Transportelement (20),
- Sensor (65) für den Wassergehalt der Abluft nach dem Verdampfer (50),
- Sensor (66) für die Temperatur nach dem Verdampfer (50),
- Sensor (64) für die Temperatur in der ersten Heizstufe (21a und 21b),
- Sensor (67) für die Temperatur in der zweiten Heizstufe (21c und 21d),
- Sensor (68) für die Restfeuchtigkeit des Feststoffanteils (3) nach dem Verdampfer (50),
- Sensor (69) für die Luftfeuchtigkeit außerhalb der Anlage
- und Sensor (70) für die Temperatur außerhalb der Anlage aufweist und die mindestens eine der Stellgrößen der Art
- Stellgröße (73) für die Geschwindigkeit des Transportelementes (20),
- Stellgröße (72) für die Heizleistung der ersten Heizstufe (21a und 21b),
- Stellgröße (71) für die Heizleistung der zweiten Heizstufe (21c und 21d),
- Stellgröße (74) für die Umwälzleistung der Homogenisierungselemente (27) im Tank (26),
- und Stellgröße (75) für die Leistung der Lüfter (34) aufweist
wobei die Steuerung (40) die mindestens eine Stellgröße basierend auf den durch den mindestens einen Sensor zur Verfügung gestellten Informationen regelt.

Die Erfindung umfasst des weiteren eine Verwendung einer Anlage wie beschrieben zur Durchführung eines Verfahrens nach den Ansprüchen wie beschrieben.

## Patentansprüche

1. Verfahren zur Aufbereitung einer wässrigen Bohrspülung (1) oder eines wässrigen Bohrschlamms, zumindest bestehend aus einem Wasseranteil (2) und einem Feststoffanteil (3), umfassend folgende Verfahrensschritte:
- Sammeln der aufzubereitenden Bohrspülung in einem Tank (26),
- Homogenisieren der Bohrspülung in dem Tank (26) durch ein Homogenisierungselement (27),
- Aufbringen der Bohrspülung auf ein Transportelement (20), wobei das Transportelement als umlaufendes Förderband ausgebildet ist, welches sich in einem geschlossenen Kreislauf bewegt und wobei das Transportelement (20) durch den Tank (26) geführt wird und in die Bohrspülung taucht,
- Transportieren der Bohrspülung zu einem Verdampfer (50) mittels des Transportelementes (20),
- Trennung von Wasseranteil (2) und Feststoffanteil (3) durch Verdampfen des Wasseranteils (2) der Bohrspülung im Verdampfer,
- Abführen des bei der Verdampfung entstehenden Wasserdampfes aus dem Verdampfer,
- Transportieren des bei der Verdampfung zurückbleibenden Feststoffanteils (3) zu einem Entfernelement (22) mittels des Transportelementes (20), wobei der auf dem Transportelement (20) zurückbleibende Feststoffanteil (3) der Bohrspülung durch das Entfernelement (22) vom Transportelement (20) entfernt wird, Sammeln und Entnahme des entfernten Feststoffanteils (3).

2. Verfahren nach Anspruch 1, **dadurch gekennzeichnet, dass** eine im Verfahren entstehende Abwärme zur Erwärmung anderer Anlagen oder Einrichtungen, wie beispielsweise eines Baucontainers verwendet wird und/oder die im Verfahren entstehende Abwärme bzw. der Energiegehalt des Wasserdampfes zum Vorwärmen der aufzubereitenden Bohrspülung (1) verwendet wird und/oder der im Verfahren entstehende Wasserdampf als Energieeintrag oder Materialeintrag für Folgeprozesse, wie beispielsweise eine Dampfturbine, verwendet wird.

3. Verfahren nach einem der vorherigen Ansprüche, **dadurch gekennzeichnet, dass** der Wasserdampf in den Vorlauf neuer Bohrspülung (1) kondensiert wird und/oder dass vor dem Verdampfen des Wasseranteils die Bohrspülung (1) homogenisiert wird und/oder dass das gesamte Verfahren in einer mobilen Anlage erfolgt, die auch während des Transports, beispielsweise auf einem Lastwagen, arbeitet.

4. Anlage zur Aufbereitung einer wässrigen Bohrspülung (1) oder eines wässrigen Bohrschlamms, zumindest bestehend aus einem Wasseranteil (2) und einem Feststoffanteil (3), insbesondere zur Durchführung des Verfahrens nach einem der vorherigen Ansprüche, wobei ein Transportelement (20) vorgesehen ist, welches die an einem ersten Ort aufgebrachte Bohrspülung (1) zu einem zweiten Ort transportiert, wobei an diesem anderen, dem zweiten Ort Heizelemente (21) vorgesehen sind, die die für die Verdampfung des Wasseranteils (2) der Bohrspülung notwendige Energie zur Verfügung stellen, an einem dritten Ort ein Entfernelement (22) des zurückgebliebenen Feststoffanteils (3) von dem Transportelement (20) vorgesehen ist und zum Sammeln und Abtransportieren des vom Transportelement (20) entfernten Feststoffanteils (3) ein Sammelelement (23) vorgesehen ist und ein Tank (26) vorgesehen ist, der die Bohrspülung (1) vor der Zuführung auf das Transportelement (20) zwischenlagert und welcher Homogenisierungselemente (27) wie beispielsweise Rührer enthält, die die Homogenität der Bohrspülung (1) aufrechterhalten und das Transportelement (20) als Förderband ausgebildet ist welches sich über mehrere Umlenkrollen (29) in einem geschlossenen Kreislauf durch die Anlage bewegt und das Aufbringen der Bohrspülung (1) auf dem Förderband ausgeführten Transportelement (20) durch das Eintauchen des Förderbandes in den, die Bohrspülung enthaltenen Tank (26) erfolgt.

5. Anlage nach Anspruch 4, **dadurch gekennzeichnet, dass** das Sammelelement (23) wannenförmig ausgebildet ist und zur Entnahme des entfernten Feststoffanteils (3) aus der Anlage entfernt wird und/oder das Sammelelement (23) förderbandartig oder als Schneckenförderer ausgebildet ist und den entfernten Feststoffanteil (3) kontinuierlich aus der Anlage entfernt.

6. Anlage nach einem der vorherigen Ansprüche 4 bis 5, **dadurch gekennzeichnet, dass** die Heizelemente (21) direkt auf das als Förderband ausgeführte Transportelement (20) ausgerichtet sind und die Heizelemente (21) die Verdampfung des Wasseranteils (2) größtenteils durch direkte Infrarotstrahlung bewirken.

7. Anlage nach einem der vorherigen Ansprüche 4 bis 6, **dadurch gekennzeichnet, dass** eine Steuerung (40) vorgesehen ist, die wenigstens einen der Sensoren der Art
- Sensor (62) für die Viskosität der Bohrspülung (1) im Tank (26),
- Sensor (61) für den Füllstand der Bohrspülung (1) im Tank (26),
- Sensor (63) für das Antriebsmoment für das Transportelement (20),
- Sensor (65) für den Wassergehalt der Abluft nach dem Verdampfer (50),
- Sensor (66) für die Temperatur nach einem Verdampfer (50, in dem die Heizelemente (21) vorgesehen sind,
- Sensor (64) für die Temperatur in einer ersten Heizstufe (21a und 21b) des Verdampfers (50),
- Sensor (67) für die Temperatur in einer zweiten Heizstufe (21c und 21d) des Verdampfers (50),
- Sensor (68) für die Restfeuchtigkeit des Feststoffanteils (3) nach dem Verdampfer (50),
- Sensor (69) für die Luftfeuchtigkeit außerhalb der Anlage
- und Sensor (70) für die Temperatur außerhalb der Anlage aufweist und die mindestens eine der Stellgrößen der Art
- Stellgröße (73) für die Geschwindigkeit des Transportelementes (20),
- Stellgröße (72) für die Heizleistung der ersten Heizstufe (21a und 21b),
- Stellgröße (71) für die Heizleistung der zweiten Heizstufe (21c und 21d),
- Stellgröße (74) für die Umwälzleistung der Homogenisierungselemente (27) im Tank (26),
- und Stellgröße (75) für die Leistung der Lüfter (34) aufweist
wobei die Steuerung (40) die mindestens eine Stellgröße basierend auf den durch den mindestens einen Sensor zur Verfügung gestellten Informationen regelt.

8. Verwendung einer Anlage nach den Ansprüchen 4 bis 7 zur Durchführung eines Verfahrens nach den Ansprüchen 1 bis 3.

## Claims

1. Process for the treatment of an aqueous drilling fluid (1) or an aqueous drilling mud, consisting at least of a water content (2) and a solids content (3), comprising the following process steps:
- collecting the drilling fluid to be treated in a tank (26),
- homogenising the drilling fluid in the tank (26) by a homogenising element (27),
- applying the drilling fluid onto a transport element (20), wherein the transport element is designed as a revolving conveyor belt, which moves in a closed circuit and wherein the transport element (20) is guided through the tank (26) and dips into the drilling fluid,
- transporting the drilling fluid to an evaporator (50) by means of the transport element (20),
- separating the water content (2) and solids content (3) by evaporating the water content (2) of the drilling fluid in the evaporator,
- removing the water vapour formed during the evaporation from the evaporator,
- transporting the solids content (3) left after evaporation to a removal element (22) by means of the transport element (20), wherein the solids content (3) of the drilling fluid left on the transport element (20) is removed by the removal element (22) from the transport element (20), collecting and removing the removed solids content (3).

2. Method according to claim 1, **characterised in that** waste heat produced during the process is used for heating other systems or devices, such as for example a portacabin, and/or the waste heat produced during the process or the energy content of the water vapour is used for preheating the drilling fluid (1) to be treated, and/or the water vapour formed during the process is used as energy input or material input for subsequent processes, such as for example a steam turbine.

3. Method according to any of the preceding claims, **characterised in that** the water vapour is condensed in the flow pipe of new drilling fluid (1) and/or **in that** before the evaporation of the water content the drilling fluid (1) is homogenised and/or the whole process is performed in a mobile system, which also operates for example on a truck during transport.

4. System for treating an aqueous drilling fluid (1) or an aqueous drilling mud, consisting at least of a water content (2) and a solids content (3), in particular for performing the process according to any of the preceding claims, wherein a transport element (20) is provided which transports the drilling fluid (1) brought up in a first location to a second location, wherein at this other second location heating elements (21) are provided which provide the necessary energy for the evaporation of the water content (2) of the drilling fluid, at a third location a removal element (22) for the remaining solids content (3) from the transport element (20) is provided and for collecting and transporting the solids content (3) removed from the transport element (20) a collecting element (23) is provided and a tank (26) is provided which temporarily stores the drilling fluid (1) before it is supplied to the transport element (20) and which contains homogenising elements (27) such as for example stirrers, which maintain the homogeneity of the drilling fluid (1) and the transport element (20) is designed as a conveyor belt which moves over several reversing rollers (29) in a closed circuit through the system and the application of the drilling fluid (1) onto the transport element (20) designed as a conveyor belt is performed by dipping the conveyor belt into the tank (26) containing the drilling fluid.

5. System according to claim 4, **characterised in that** the collecting element (23) is designed to be trough-like and for removing the separated solids content (3) is removed from the system and/or the collecting element (23) is designed in the form of a conveyor belt or as a screw conveyor and continually removes the separated solids content (3) from the system.

6. System according to any of the preceding claims 4 to 5, **characterised in that** the heating elements (21) are aligned directly with the transport element (20) designed as a conveyor belt and the heating elements (21) evaporate the water content (2) largely by means of direct infrared radiation.

7. System according to any of the preceding claims 4 to 6, **characterised in that** a controller (40) is provided which has at least one sensor of the type:
- sensor (62) for the viscosity of the drilling fluid (1) in the tank (26),
- sensor (61) for the filling level of the drilling fluid (1) in the tank (26),
- sensor (63) for the driving torque for the transport element (20),
- sensor (65) for the water content of the exhaust air after the evaporator (50),
- sensor (66) for the temperature after an evaporator (50), in which the heating elements (21) are provided,
- sensor (64) for the temperature in the first heating stage (21a and 21b) of the evaporator (50),
- sensor (67) for the temperature in a second heating stage (21c and 21d) of the evaporator (50),
- sensor (68) for the residual moisture of the solids content (3) after the evaporator (50),
- sensor (69) for the air humidity outside the system,
- and sensor (70) for the temperature outside the system, and which has at least one correcting variable of the type:
- correcting variable (73) for the speed of the transport element (20),
- correcting variable (72) for the heating output of the first heating stage (21a and 21b),
- correcting variable (71) for the heating output of the second heating stage (21c and 21d),
- correcting variable (74) for the circulation capacity of the homogenisation elements (27) in the tank (26),
- and correcting variable (75) for the output of the cooling fans (34),
wherein the controller (40) controls the at least one correcting variable based on the information provided by the at least one sensor.

8. Use of a system according to claims 4 to 7 for performing a process according to claims 1 to 3.

## Revendications

1. Procédé de traitement d'une eau de forage (1) ou d'une boue aqueuse de forage, constituée au moins d'une composante aqueuse (2) et d'une composante solide (3), comprenant les étapes de procédé suivantes :
- collecte de la boue de forage à traiter dans un réservoir (26),
- homogénéisation de la boue de forage dans le réservoir (26) par un élément d'homogénéisation (27),
- épandage de la boue de forage sur un élément de transport (20), lequel élément de transport est réalisé sous la forme d'un convoyeur à bande tournant qui se déplace en un circuit fermé et lequel élément de transport (20) passe par le réservoir (26) et plonge dans la boue de forage,
- transport de la boue de forage jusqu'à un évaporateur (50) au moyen de l'élément de transport (20),
- séparation de la composante aqueuse (2) et de la composante solide (3) par évaporation de la composante aqueuse (2) de la boue de forage dans l'évaporateur,
- évacuation de la vapeur d'eau produite lors de l'évaporation hors de l'évaporateur,
- transport de la composante solide (3) restant lors de l'évaporation jusqu'à un élément d'enlèvement (22) au moyen de l'élément de transport (20), laquelle composante solide (3), restant sur l'élément de transport (20), de la boue de forage est enlevée de l'élément de transport (20) par l'élément d'enlèvement (22), collecte et élimination de la composante solide (3) enlevée.

2. Procédé selon la revendication 1, **caractérisé en ce que** la chaleur dissipée dans le procédé est utilisée pour chauffer d'autres installations ou équipements, par exemple une construction modulaire, et/ou la chaleur dissipée dans le procédé ou la capacité énergétique de la vapeur d'eau est utilisée pour préchauffer la boue de forage (1) à traiter et/ou la vapeur d'eau produite dans le procédé est utilisée comme apport d'énergie ou apport de matière première pour des processus en aval, par exemple une turbine à vapeur.

3. Procédé selon l'une quelconque des revendications précédentes, **caractérisé en ce que** la vapeur d'eau est condensée dans l'alimentation d'une nouvelle boue de forage (1) et/ou **en ce que** la boue de forage (1) est homogénéisée avant l'évaporation de la composante aqueuse et/ou **en ce que** l'ensemble du procédé s'effectue dans une installation mobile qui travaille aussi pendant le transport, par exemple sur un camion.

4. Installation de traitement d'une eau de forage (1) ou d'une boue aqueuse de forage, constituée au moins d'une composante aqueuse (2) et d'une composante solide (3), en particulier pour la mise en œuvre du procédé selon l'une quelconque des revendications précédentes,
dans laquelle il est prévu un élément de transport (20) qui transporte la boue de forage (1) épandue en un premier lieu jusqu'à un deuxième lieu,
dans laquelle il est prévu dans cet autre, deuxième, lieu des éléments de chauffage (21) qui fournissent l'énergie nécessaire à l'évaporation de la composante aqueuse (2) de la boue de forage, il est prévu en un troisième lieu un élément d'enlèvement (22) de la composante solide (3) restante hors de l'élément de transport (20) et il est prévu un élément de collecte (23) pour la collecte et l'évacuation de la composante solide (3) enlevée de l'élément de transport (20) et il est prévu un réservoir (26) qui stocke temporairement la boue de forage (1) avant l'amenée sur l'élément de transport (20) et qui contient des éléments d'homogénéisation (27), par exemple des agitateurs, qui maintiennent l'homogénéité de la boue de forage (1) et l'élément de transport (20) est réalisé sous la forme d'un convoyeur à bande qui se déplace via plusieurs rouleaux de renvoi (29) en circuit fermé à travers l'installation et l'épandage de la boue de forage (1) sur l'élément de transport (20) réalisé sous forme de convoyeur à bande s'effectue par plongée du convoyeur à bande dans le réservoir (26) contenant la boue de forage.

5. Installation selon la revendication 4, **caractérisée en ce que** l'élément de collecte (23) est réalisé sous forme de cuve et est enlevé de l'installation pour l'élimination de la composante solide (3) enlevée et/ou l'élément de collecte (23) est réalisé sous forme de convoyeur à bande ou de convoyeur à vis et enlève en continu de l'installation la composante solide (3) enlevée.

6. Installation selon l'une quelconque des revendications 4 à 5, **caractérisée en ce que** les éléments de chauffage (21) sont dirigés directement sur l'élément de transport (20) réalisé sous forme de convoyeur à bande et les éléments de chauffage (21) provoquent l'évaporation de la composante aqueuse (2) en majeure partie par rayonnement infrarouge direct.

7. Installation selon l'une quelconque des revendications 4 à 6, **caractérisée en ce qu'**il est prévu une commande (40) qui comporte au moins l'un des capteurs du type :
- capteur (62) pour la viscosité de la boue de forage (1) dans le réservoir (26),
- capteur (61) pour le niveau de remplissage de la boue de forage (1) dans le réservoir (26),
- capteur (63) pour le couple moteur destiné à l'élément de transport (20),
- capteur (65) pour la teneur en eau de l'air évacué après l'évaporateur (50),
- capteur (66) pour la température après un évaporateur (50) dans lequel les éléments de chauffage (21) sont prévus,
- capteur (64) pour la température dans un premier étage chauffant (21a et 21b) de l'évaporateur (50) ;
- capteur (67) pour la température dans un deuxième étage chauffant (21c et 21d) de l'évaporateur (50) ;
- capteur (68) pour l'humidité résiduelle de la composante solide (3) après l'évaporateur (50),
- capteur (69) pour l'humidité de l'air en dehors de l'installation
- et capteur (70) pour la température en dehors de l'installation et qui détermine l'une des grandeurs réglantes du type :
- grandeur réglante (73) pour la vitesse de l'élément de transport (20),
- grandeur réglante (72) pour la puissance de chauffage du premier étage chauffant (21a et 21b),
- grandeur réglante (71) pour la puissance de chauffage du deuxième étage chauffant (21c et 21d),
- grandeur réglante (74) pour la puissance d'agitation des éléments d'homogénéisation (27) dans le réservoir (26)
- et grandeur réglante (75) pour la puissance des ventilateurs (34),
laquelle commande (40) régule l'au moins une grandeur réglante sur la base des informations mises à disposition par l'au moins un capteur.

8. Utilisation d'une installation selon l'une quelconque des revendications 4 à 7 pour la mise en œuvre d'un procédé selon les revendications 1 à 3.
